Europäisches Patentamt

European Patent Office

Office européen des brevets

(19)

(11) Numéro de publication : **0 020 204**
**B1**

(12) **FASCICULE DE BREVET EUROPÉEN**

(45) Date de publication du fascicule du brevet :
03.02.82

(21) Numéro de dépôt : **80400596.5**

(22) Date de dépôt : **30.04.80**

(51) Int. Cl.³ : **F 16 C 35/12, B 60 B 37/10,
B 60 B 35/02**

(54) **Dispositif de montage de roue non motrice.**

(30) Priorité : **18.05.79 FR 7912749**

(43) Date de publication de la demande :
**10.12.80 (Bulletin 80/25)**

(45) Mention de la délivrance du brevet :
**03.02.82 Bulletin 82/05**

(84) Etats contractants désignés :
**AT BE DE GB IT NL SE**

(56) Documents cités :
**FR - A - 413 990**
**US - A - 2 170 522**
**US - A - 2 510 659**

(73) Titulaire : **REGIE NATIONALE DES USINES RENAULT
Boite postale 103 8-10 avenue Emile Zola
F-92109 Boulogne-Billancourt (FR)**

(72) Inventeur : **Laurent, Alain
2 Square Vivaldi "Les Epinettes"
F-78150 Le Chesnay (FR)**

(74) Mandataire : **Réal, Jacques et al
8 & 10, avenue Emile Zola
F-92109 Boulogne Billancourt (FR)**

Imprimerie Jouve, 18, rue St-Denis, 75001 Paris, France

Dispositif de montage de roue non motrice

La présente invention se rapporte à un dispositif de montage de roue non motrice, notamment sur un véhicule automobile (FR-A-413 990).

Les montages de roues non motrices de véhicule automobile sont fréquemment réalisés par des roulements simples, coniques, nécessitant des axes à collerette emmanchés à force dans les pièces support ou des axes à plateaux boulonnés sur ces mêmes pièces support.

Ces montages impliquent :

— le réglage du jeu axial de l'ensemble tournant par des écrous et freins de positionnement ou par des entretoises déformables,

— des coûts de réalisation importants pour réaliser des axes à collerette ou à plateau.

Plus récemment sont apparus des roulements de génération évoluée intégrant des fonctions supplémentaires sur les bagues de roulement ; par exemple : la fonction moyeu support de roue, la fonction fusée tournante, etc.

Ces nouveaux montages, s'ils présentent l'avantage de la disparition du réglage du jeu, laissent pour l'heure les surcoûts de réalisation, que l'absence du réglage précédent ne compense pas et de loin.

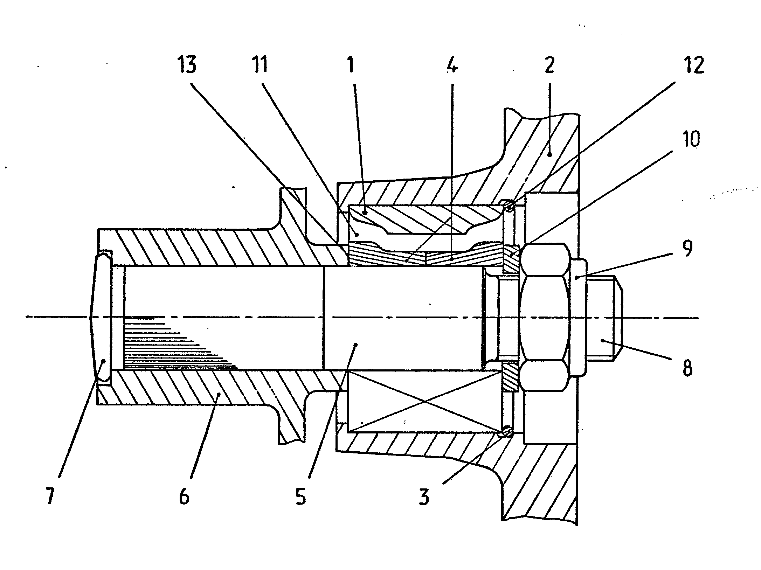

D'autres avantages ressortiront de la description de l'invention, faite à titre d'exemple non limitatif au regard de la figure unique ci-jointe, qui représente une coupe longitudinale du dispositif de montage de roue en cause.

Ce montage de roue est essentiellement constitué d'un roulement 11 à deux rangées d'éléments roulants, dont les bagues intérieures 4 fonctionnent fortement pressées l'une contre l'autre par l'intermédiaire de l'épaulement 13 d'un axe 5 quasi-cylindre parfait. Le roulement, par construction, possède une plage de jeu ou de serrage préétablie.

Il peut être cylindrique à deux rangées de billes à contact oblique, ou, dans les cas d'encombrement réduit en diamètre extérieur, un roulement biconique, ce qui est le cas général pour les roues équipées de frein à tambour.

De tels roulements, dits « cartouche », seront avantageusement utilisés prégraissés et auto-étanches.

Le roulement 11 est emmanché à force par l'intermédiaire de sa bague extérieure 1 dans un logement cylindrique central d'une roue 2 ou d'un moyeu-tambour tournant. Un anneau de sécurité 3, engagé dans une gorge circulaire 12, assure la non-extraction du roulement par perte du serrage. Cet anneau de sécurité 3 peut être réalisé économiquement en fil cylindrique type « corde à piano »...

Les bagues intérieures du roulement 4 sont glissées à la main sur la partie lisse rectifiée de l'axe 5 appelé fusée-clou.

La fusée-clou 5 est emmanchée à force soit lisse, soit crantée, dans la pièce support 6 qui peut être un bras de suspension en tôle, en fonte, un porte-fusée, un essieu, etc.

La fusée-clou 5 porte une mini-tête de sécurité 7 sur la partie opposée au filetage 8. Cette tête assure le non-démanchement de la fusée hors de la pièce support 6.

Enfin, le blocage énergique de l'écrou-frein 9 sur la rondelle 10 assure le jeu axial final du système, ainsi que la mise sous précontrainte de tension de la fusée, cette dernière étant appelée à subir essentiellement des moments de flexion.

L'ensemble ainsi constitué forme un encastrement mécanique prêt à subir tous les moments de flexion auxquels il sera soumis en fonctionnement.

Le dispositif ci-dessus est particulièrement avantageux, aux niveaux économique, pratique et technique.

— Sur le plan économique, la fusée-clou 5 ainsi conçue exige une gamme de fabrication particulièrement simplifiée, qui se résume aux opérations suivantes : le tronçonnage d'un barreau cylindrique, le traitement dans la masse, l'usinage du filet au diamètre avant roulage, la rectification cylindrique sans centre, en enfilade, le refoulage de la tête par déformation à froid, le roulage du filet et éventuellement du crantage (cas des emmanchements dans de la fonte, par exemple).

Cette fusée 5 présente une économie d'au moins 50 % par rapport aux autres réalisations utilisées antérieurement.

— Sur le plan pratique le dispositif selon l'invention se caractérise par ses facilités de montage et de démontage.

Ce système supprime, en effet, tout réglage du jeu et simplifie par-là même l'opération du montage ainsi que le nombre de pièces utilisées. Pour monter la roue non motrice 2 équipé du roulement 11, il suffit de le glisser sur la fusée 5, de serrer les bagues 4 par l'intermédiaire de la rondelle 10 et de l'écrou frein 9, ce dernier étant bloqué à un couple prédéterminé.

Lors d'un démontage, à l'occasion d'une intervention sur les systèmes de freinage à tambour, et lorsqu'on utilise un moyeu-tambour, le desserrage de l'unique écrou frein 9 suffit pour permettre de faire glisser à la main l'ensemble sur la fusée sans risque d'introduction de corps étrangers dans la graisse des roulements, celui-ci n'étant pas démonté, donc sans risque d'atténuer ses qualités de tenue en fatigue au roulement, car il conservera son intégrité pendant toute l'opération.

— Sur le plan technique le dispositif ci-dessus participe à l'amélioration de la tenue en endurance des montages de roues non motrices :

Les sollicitations maximales en flexion sur la fusée sont atténuées, car cette dernière est, par assemblage, soumise à des précontraintes de tension ; les risques de rupture en sont d'autant diminués.

Le contrôle plus précis du jeu axial par la réalisation propre du roulement et par le serrage énergique aux faces assurent une plus grande longévité du roulement ainsi qu'un risque très atténué d'apparition de bruits de claquement causé par un jeu excessif.

## Revendications

1. Dispositif de montage de roue non motrice (2), notamment sur un véhicule automobile, avec un axe cylindrique (5) servant de fusée, caractérisé par le fait que l'axe ne comporte comme partie usinée qu'une tête de sécurité (7) à l'une de ses extrémités et un filetage à l'autre, à l'exclusion de toute collerette ou élément analogue, qu'il est prévu peut être introduit à force dans un support (6) solidarisé à une caisse, tel qu'un bras de suspension, jusqu'à ce que la tête de sécurité (7) vienne en appui sur ledit support (6), que l'axe est tel que la roue non motrice à ajuster peut y coulisser, par l'intermédiaire d'un roulement à billes (11) bloqué dans un logement correspondant de cette roue (2), l'ensemble ci-dessus étant alors verrouillé en position avec le jeu axial et la précontrainte désirés au moyen d'un écrou-frein (9) doublé d'une rondelle (10), vissé sur l'extrémité filetée dudit axe sous un couple prédéterminé.

2. Dispositif de montage de roue selon la revendication 1, caractérisé en ce que le support (6) de l'axe-fusée constitue une butée pour la roue non motrice (2).

3. Dispositif de montage de roue selon les revendications 1 et 2, caractérisé en ce que le roulement à billes (11) est en butée dans la roue non motrice (2) contre un anneau de sécurité (3) engagé dans une gorge circulaire ménagée à la périphérie du logement central de cette roue non motrice (2) du côté opposé à celui par lequel on introduit l'axe-fusée (5).

## Claims

1. A device for mounting a non-driving wheel (2), especially on an automotive vehicle, comprising a cylindrical axle (5) forming a spindle, characterized in that said axle has a single machined portion consisting of a safety head (7) located at one of its ends and a threaded portion located at the other end of said axle, in the absence of any collar or similar element, in that said axle is adapted to be forcibly mounted into a support (6) such as a suspension arm, integral with a box structure, until the safety head (7) engages said support (6), in that said axle is designed so that the non-driving wheel to be mounted is able to slide on the same by the intermediary of a ball bearing (11) blocked in a corresponding housing of said wheel (2), the above assembly then being locked in its position with the convenient axial clearence and the convenient pre-constraint by means of a braking nut (9) associated to a washer (10) and screwed on the threaded end of said axle with a predetermined torque.

2. A device for mounting a wheel according to claim 1, characterized in that the support (6) of the spindle axle constitutes a stop member for the non-driving wheel.

3. A device for mounting a wheel according to claims 1 and 2, characterized in that the ball bearing (11) abuts, whithin said non-driving wheel (2), against a safety ring (3) inserted in a circular groove provided at the periphery of the central housing of said non-driving wheel (2) on the side thereof which is opposed to the side from which the spindle axle (5) is introduced.

## Ansprüche

1. Vorrichtung zum Anbringen eines nicht-treibenden Rades (2), insbesondere an einem Motorfahrzeug, mit einer einen Lagerhals bildenden zylindrischen Achse (5), dadurch gekennzeichnet, dass der einzige bearbeitete Teil der Achse einen an einem ihrer Enden angeordneten Sicherungskopf (7) und ein an ihrem anderen Ende angeordnetes Gewinde ist, unter Ausschluss jeglicher Flanschen od. dgl. Elemente, dass die Achse derart ausgebildet ist, dass sie in einen mit einem Kasten fest verbundenen Halter (6) wie Aufhängungsarm, mit festem Reibungssitz einsetzbar ist, bis der Sicherungskopf (7) an dem Halter (6) zur Anlage kommt, dass die Achse derart ausgebildet ist, dass das anzubringende nicht-treibende Rad unter Zwischenschaltung eines in einem geeigneten Gehäuse des Rades fest eingesetzten Kugellagers (11) auf der Achse gleiten kann, wobei die obige Baueinheit sodann mit dem gewünschten Axialspiel und der gewünschten Vorspannung vermittels einer mit einer Unterlegscheibe (10) zusammenwirkenden, mit einem vorbestimmten Drehmoment auf das mit dem Gewinde versehene Ende der Achse aufgeschraubten Bremsmutter (9) in ihrer Lage verriegelt wird.

2. Vorrichtung zum Anbringen eines Rades nach Anspruch 1, dadurch gekennzeichnet, dass der Lagerhalsachsenhalter (6) einen Anschlag für das nicht-treibende Rad bildet.

3. Vorrichtung zum Anbringen eines Rades nach Anspruch 1 und 2, dadurch gekennzeichnet, dass das Kugellager (11) in dem nicht-treibenden Rad (2) an einem Sicherungsring (3) anliegt, der in eine am Umfang des zentralen Gehäuses des nicht-treibenden Rades (2) vorgesehene Kreisnute eingreift, welche an derjenigen Seite des Rades angeordnet ist, welche der Seite, an der die Lagerhalsachse (5) eingeführt wird, entgegengesetzt ist.